Europäisches Patentamt

European Patent Office

Office européen des brevets

(19)

(11) Veröffentlichungsnummer: **0 279 491**

**A2**

# (12) EUROPÄISCHE PATENTANMELDUNG

(21) Anmeldenummer: **88200259.5**

(22) Anmeldetag: **12.02.88**

(51) Int. Cl.4: **H04L 1/20**

(30) Priorität: **17.02.87 DE 3704980**

(43) Veröffentlichungstag der Anmeldung:
**24.08.88 Patentblatt 88/34**

(84) Benannte Vertragsstaaten:
**DE FR GB IT NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL**

(72) Erfinder: **Bednarz, Jürgen, Dipl.-Ing.**
**Siemensstrasse 50**
**D-8500 Nürnberg 40(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung zur Überwachung eines Binärsignales.**

(57) Die beschriebene Schaltungsanordnung zur Überwachung eines Binärsignals enthält zwei Flip-Flops (F1, F2), die von einer Steuereinheit Steuerimpulse erhalten, deren Abstand mindestens so groß wie die charakteristische Wartezeit ist. Die charakteristische Wartezeit ist die Zeit, innerhalb derer im zu überwachenden Binärsignal - Normalbetrieb vorausgesetzt - mindestens ein Pegelwechsel auftritt.

Damit die beiden Flip-Flops vom gleichen Takt (T) getaktet werden können, ist jedem von ihnen eine Gatterschaltung (G1, G2) zugeordnet, deren Ausgang mit dem Dateneingang des zugeordneten Flip-Flops verbunden ist. Sendet die Steuereinheit einen Steuerimpuls aus, dann wird mit Hilfe der ersten Gatterschaltung (G1) dafür gesorgt, daß das erste Flip-Flop (F1) in seinen gesetzten Zuschaltzustand übergehen kann, während der Schaltzustand des zweiten Flip-Flops (F2), bedingt durch die Wirkung der zweiten Gatterschaltung (G2), an den invertierten Schaltzustand des ersten Flip-Flops (F1) angeglichen wird. Bei Abwesenheit von Steuerimpulsen kann das erste Flip-Flop (F1) nur durch eine binäre 1 im zu überwachenden Binärsignal in seinen rückgesetzten Schaltzustand gebracht werden, während das zweite Flip-Flop (F2) seinen Schaltzustand nicht ändern kann.

## Schaltungsanordnung zur Überwachung eines Binärsignales

Die Erfindung betrifft eine Schaltungsanordnung zur Überwachung eines Binärsignales, das im Normalbetrieb innerhalb einer charakteristischen Wartezeit mindestens einen Pegelwechsel aufweist, mit zwei Flip-Flops, die von einer Steuereinheit Steuerimpulse erhalten, deren Abstand mindestens so groß wie die charakteristische Wartezeit ist.

Eine Schaltungsanordnung mit den genannten Merkmalen ist aus der europäischen Patentanmeldung EP 0 191 421 bekannt. Die Steuereinheit ist bei der bekannten Anordnung ein Frequenzteiler, der den Bittakt des zu überwachenden Binärsignales herunterteilt und dessen Ausgang mit dem Rücksetzeingang eines ersten D-Flip-Flops verbunden ist. Das Teilungsverhältnis des Teilers ist so gewählt, daß der zeitliche Abstand zweier Rücksetzimpulse für das erste D-Flip-Flop mit der oben erwähnten charakteristischen Wartezeit übereinstimmt. Dem Takteingang des ersten D-Flip-Flops wird das zu überwachende Signal zugeführt. Mit einem zweiten D-Flip-Flop, das mit dem Ausgangssignal des Teilers - also mit den Rücksetzimpulsen für das erste D-Flip-Flop - getaktet wird, wird der Zustand der ersten D-Flip-Flops abgefragt und vom zweiten D-Flip-Flop übernommen. Am Zustand des zweiten D-Flip-Flops ist dann erkennbar, ob während der charakteristischen Wartezeit ein Flankenwechsel aufgetreten ist oder nicht. Ist kein Flankenwechsel aufgetreten, wird das als Kriterium dafür gewertet, daß ein Defekt vorliegt.

Die bekannte Anordnung ist integrierbar; jedoch wird eine solche Anordnung in den seltensten Fällen für sich als integrierter Baustein verwendet werden, vielmehr wird sie in der Regel nur ein kleiner Teil der auf einem Chip integrierten Funktioneinheiten sein.

Bei Chips mit hoher Integrationsdichte ist es von großer Wichtigkeit, einfache, jedoch zuverlässige Testverfahren zu haben, mit denen sich die Funktiontüchtigkeit sämtlicher auf dem Chip integrierter Einheiten überprüfen läßt. Eine Voraussetzung für ein solches Verfahren, auf das hier nicht näher eingegangen wird, ist z.B., daß sämtliche Flip-Flops mit dem gleichen Takt getaktet werden. Bei der bekannten Schaltungsanordnung wird das erste Flip-Flop von Flanken des zu überwachenden Binärsignales getaktet und das zweite von Flanken der Steuerimpulse. Daher müßte ein Chip, der die bekannte Anordnung als Teil enthielte, in einem gesonderten Verfahren getestet werden.

Der Erfindung liegt die Aufgabe zugrunde, eine Schaltungsanordnung der eingangs genannten Art anzugeben, bei der die Flip-Flops mit dem gleichen Takt getaktet werden.

Die Aufgabe wird dadurch gelöst, daß jedes Flip-Flop mit einem Takt getaktet wird, dessen Frequenz mindestens so groß ist wie die des Bittaktes des zu überwachenden Binärsignales, daß der Dateneingang eines jeden Flip-Flops mit dem Ausgang einer ihm zugeordneten Gatterschaltung verbunden ist und die Eingänge einer jeden Gatterschaltung mit den Ausgängen der Flip-Flops, der Steuereinheit und der Leitung für das zu überwachende Binärsignal so verbunden sind, daß folgende Merkmale zutreffen:

a) wenn ein Steuerimpuls vorliegt, dann nimmt die Ausgangsvariable der ersten Gatterschaltung einen ersten vorbestimmten Binärwert an, während die Ausgangvariable der zweiten Gatterschaltung durch den im ersten Flip-Flop vor dem Auftreten des Steuerimpulses gespeicherten Binärwert festgelegt ist

b) wenn kein Steuerimpuls vorliegt, dann nimmt die Ausgangsvariable der ersten Gatterschaltung den im ersten Flip-Flop gespeicherten Binärwert an, falls im zu überwachenden Binärsignal ein zweiter vorbestimmter Binärwert auftritt, und sie nimmt den zum ersten vorbestimmten Binärwert inversen Wert an, falls im zu überwachenden Binärsignal der zum zweiten vorbestimmten Binärwert inverse Wert auftritt, während die Ausgangsvariable der zweiten Gatterschaltung den im zweiten Flip-Flop gespeicherten Binärwert annimmt.

Die logische Funktion der in der Aufgabenlösung genannten Gatterschaltungen ist durch die angegebenen Merkmale a) und b) eindeutig festgelegt, wenn die verwendeten Konjunktionen (und; wenn ... dann; falls) und die Gleichheit von Werten als satzlogische Operationen (Konjunktion, Subjunktion, Äquivalenz) gelesen werden. Alle funktionsbestimmenden Schaltungsmerkmale der Gatterschaltung lassen sich dann auch formelhaft niederschreiben (vgl. z.B. Formeln (1) und (2) weiter unten).

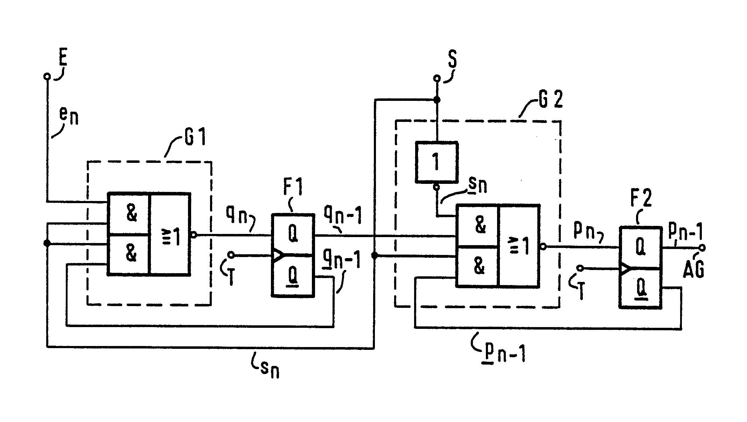

Vorteilhafte Ausgestaltungen der Erfindung enthalten die Unteransprüche. An Hand der Figur soll ein Ausführungsbeispiel der Erfindung näher erläutert werden. Die Figur zeigt eine Überwachungsschaltung mit erfindungsgemäßen Schaltungsmerkmalen.

In der Figur liegt ein zu überwachendes Binärsignal $e_n$ an einer Klemme E an. Bei dem Binärsignal $e_n$ handelt es sich um ein isochrones Signal. Der zugehörige Takt T, der von einer nicht eingezeichneten Taktrückgewinnung aus dem Signal $e_n$ gewonnen wird, liegt an den Takteingängen zweier D-Flip-Flops F1 und F2 an. Das Ausgangssi-

gnal $q_n$ der ersten Gatterschaltung G1, die aus zwei UND-Gattern besteht, deren Ausgangssignale durch ein NOR-Gatter verknüpft werden, ist an den D-Eingang des zugehörigen ersten D-Flip-Flops F1 geführt. Der Q-Ausgang mit dem Signal $q_{n-1}$ ist mit dem Eingang des unteren UND-Gatters der Gatterschaltung G1 verknüpft, während dem zweiten Eingang dieses Gatters und einem Eingang des oberen UND-Gatters die vom Carry-Ausgang eines nicht gezeigten Zählers kommenden Steuerimpulse $s_n$ zugeführt werden, die an einem Anschluß S anliegen. An den zweiten Eingang des oberen UND-Gatters der ersten Gatterschaltung G1 ist das zu überwachende Signal $e_n$ angelegt.

Eine zweite Gatterschaltung G2 enthält ebenfalls zwei UND-Gatter, deren Ausgangssignale durch ein NOR-Gatter verknüpft sind. Das zweite D-Flip-Flop F2 ist mit der zweiten Gatterschaltung G2 ebenso verbunden wie das D-Flip-Flop F1 mit der Gatterschaltung G1. Das Ausgangssignal der zweiten Gatterschaltung ist mit $p_n$ bezeichnet und die Signale am Q-bzw. $\underline{Q}$-Ausgang des zweiten D-Flip-Flops F2 mit $p_{n-1}$ bzw. $\underline{p}_{n-1}$. Der zweite Eingang des unteren UND-Gatters der Gatterschaltung G2 ist ebenfalls mit dem Carry-Ausgang des schon erwähnten Zählers verbunden, während das obere UND-Gatter das Signal $q_{n-1}$ vom Q-Ausgang des ersten D-Flip-Flops F1 mit dem durch einen Inverter invertierten Carry-Signal $\underline{s}_n$ verknüpft.

Die in der Figur symbolisierten Signale stellen Variable für die Binärwerte dieser Signale zu einem Zeitpunkt $t_n = nT_o$ dar; daher sind sie mit einem n indiziert. $T_o$ ist die Periodendauer des Taktes T. Die Invertierung der Variablen ist hier mit einem Querstrich unter der Variablen selbst symbolisiert. Die Speicherwirkung der D-Flip-Flops F1 und F2 kommt dadurch zum Ausdruck, daß zum Zeitpunkt $t_n$ an ihrem Ausgang die Binärwerte zum vorangegangenen Zeitpunkt $t_{n-1}$ anliegen.

Die zweimalige Verwendung von zwei UND-Gattern mit anschließender NOR-Verknüpfung - eine sogenannte "Standardzelle" - hat bei der Herstellung der Gesamtschaltung als integrierte Schaltung den Vorteil, daß eben solche vom Hersteller - schon vorgefertigten Standardzellen verwendet werden können. Andere Kombinationen von Gattern für die Gatterschaltungen G1 und G2 sind möglich, ohne daß sich die Wirkungsweise der Gesamtschaltung ändert, wie noch später gezeigt wird.

In der weiteren Erläuterung soll einem Vorschlag von I.Tammelo und G.Moens gefolgt werden, der die schreibmaschinengerechte Notation logischer Operationen betrifft: Binäre oder logische Variable werden nur durch Kleinbuchstaben (gegebenenfalls indiziert) gekennzeichnet; logische Verknüpfungen von zwei Variablen sollen durch Großbuchstaben gekennzeichnet werden, die vor die beiden zu verknüpfenden Variablen (Polnische Notation) gestellt werden. Die Negierung einer Verknüpfung wird hier mit einem Querstrich unter dem Großbuchstaben und die Negierung einer Variablen mit einem Querstrich unter dem Kleinbuchstaben angedeutet. So wird die UND-Verknüpfung der Variablen $e_n$ und $s_n$ durch $Ke_ns_n$ (K wie Konjunktion) dargestellt. Für die OR-Verknüpfung ist der Großbuchstabe A (A wie Adjunktion) reserviert. Diese Notation hat den Vorteil, daß auch umfangreiche Mehrfachverknüpfungen ohne Klammerungen eindeutig und leicht verständlich sind. So wird zum Beispiel die logische Funktion einer Schaltung nach der Figur durch die Gültigkeit folgender beider Gleichungen beschrieben:

$$q_n = AKe_ns_nK\underline{s}_n\underline{q}_{n-1} \qquad (1)$$
$$p_n = \underline{A}Kq_{n-1}\underline{s}_nK\underline{s}_n\underline{p}_{n-1} \qquad (2)$$

Die Gleichungen (die Äquivalenz ist hier durch das Gleichheitszeichen wiedergegeben) legen die Werte der Variablen $q_n$ und $p_n$ durch die Werte der rechts stehenden Variablen fest. Die Zahl der hierfür nötigen Gatter ist an der Zahl der Großbuchstaben zu erkennen. Wegen der logischen Äquivalenz von $AKe_ns_nKa_n\underline{q}_{n-1}$ und $Ks_nAe_n\underline{q}_{n-1}$ (Distributivgesetz) kann die zuletzt angegebene Konjunktion (UND-Verknüpfung) in Gleichung (1) eingesetzt werden. Man erhält dann eine funktionsgleiche Variante der Schaltung G1 mit nur drei Gattern. Ebenso ergibt sich eine Schaltungsvariante für die Gatterschaltung G2, wenn man die Äquivalenz von $\underline{A}Kq_{n-1}\underline{s}_nK\underline{s}_n\underline{p}_{n-1}$ und $AKq_{n-1}\underline{s}_nK\underline{s}_np_{n-1}$ berücksichtigt; die Variablen $\underline{q}_{n-1}$ und $p_{n-1}$ stehen wegen der Flip-Flops F1 und F2 ohnehin zur Verfügung und brauchen nicht durch Negation aus den Variablen $q_{n-1}$ und $\underline{p}_{n-1}$ gewonnen zu werden. Durch Berücksichtigung weiterer Äquivalenzen oder durch die Verwendung von D-Flip-Flops, die mit den negativen Taktflanken getaktet werden, oder durch beides erhält man weitere funktionsgleiche Schaltungsvarianten, die alle zum Gegenstand der Erfindung gehören.

Zur Erläuterung der Funktionsweise der Schaltung nach der Figur wird zunächst festgehalten, welche Wahl bei den Alternativen getroffen worden ist, die in der Aufgabenlösung enthalten sind. Das Carry-Signal $s_n$ nimmt in regelmäßigen Abständen den Wert 0 an und hat für alle dazwischenliegenden Zeiten den Wert 1. $s_n = 0$ bedeutet also das Vorliegen eines Steuerimpulses. Wie Gleichung (1) und auch der Figur zu entnehmen ist, wird dann $q_n = 1$; der erste vorbestimmte Binärwert ist also der Wert 1. Er wird mit der nächsten aktiven Taktflanke des Taktes T - sie liegt etwa auf den Bitmitten - an den Q-Ausgang des D-Flip-Flops F1 übernommen. Die Zeit zwischen zwei Nullwerten von $s_n$ ist so groß gewählt, daß im Normalbetrieb das Binärsignal $e_n$ während dieser Zeit nicht dauernd den zweiten vorbestimmten Binärwert, nämlich den Wert 0, annimmt.

Für $s_n = 0$ bzw. $s_n = 1$ folgt aus Gleichung (2), daß $p_n = q_{n-1}$, d.h., die Variable $p_n$ nimmt den invertierten Wert an, der im Flip-Flop F1 vor dem Auftreten des Rücksetzimpulses gespeichert war. Dieser Wert wird mit der nächsten aktiven Taktflanke an den Q-Ausgang des D-Flip-Flops F2 übernommen und liegt an einer Ausgangsklemme AG an.

Ist $q_{n-1} = 1$ bzw. $q_{n-1} = 0$, (gesetzter Schaltzustand des D-Flip-Flops F1) und $s_n = 1$, so wird $q_n = e_n$, wie Gleichung (1) zeigt. Das bedeutet, daß nur $e_n = 1$ - also eine 1 im zu überwachenden Binärsignal - den Schaltzustand des D-Flip-Flops F1 ändern kann. Ist das Flip-Flop F1 rückgesetzt, also $q_{n-1} = 0$ bzw. $q_{n-1} = 1$ und immer noch $s_n = 1$, bleibt nach Gleichung (1) $q_n = 0$, und zwar unabhängig von den Werten von $e_n$. Das einmal durch eine 1 im zu überwachenden Binärsignal rückgesetzte D-Flip-Flop F1 kann also nur durch einen Steuerimpuls $s_n = 0$ wieder in den gesetzten Zustand gebracht werden.

Wurde z.B. das D-Flip-Flop F1 wegen einer 1 im binären Signal rückgesetzt, so wird beim nächsten Steuerimpuls der Zustand des D-Flip-Flops F2 wieder an den invertierten Zustand des D-Flip-Flops F1 angeglichen, bevor das Flip-Flop F1 erneut gesetzt wird.

Zu zeigen ist noch, daß sich bei Abwesenheit von Steuerimpulsen, also bei $s_n = 1$, der Zustand des D-Flip-Flops F2 nicht ändern kann. Setzt man in Gleichung (2) $s_n = 1$ ein, so ergibt sich $p_n = p_{n-1}$. Das Flip-Flop F2 übernimmt also seinen gespeicherten Binärwert wieder an seinen Q-Ausgang.

Ist kein Binärsignal vorhanden - im vorliegenden Beispiel heißt das $e_n = 0$ für alle n - so liegt am Ausgang AG eine Dauernull an.


**Ansprüche**

1. Schaltungsanordnung zur Überwachung eines Binärsignales, das im Normalbetrieb innerhalb einer charakteristischen Wartezeit mindestens einen Pegelwechsel aufweist, mit zwei Flip-Flops (F1, F2), die von einer Steuereinheit Steuerimpulse erhalten, deren Abstand mindestens so groß wie die charakeristische Wartezeit ist, dadurch gekennzeichnet, daß jedes Flip-Flop (F1, F2) mit einem Takt (T) getaktet wird, dessen Frequenz mindestens so groß ist wie die des Bittaktes des zu überwachenden Binärsignales ($e_n$), daß der Dateneingang eines jeden Flip-Flops (F1, F2) mit dem Ausgang einer ihm zugeordneten Gatterschaltung (G1, G2) verbunden ist und die Eingänge einer jeden Gatterschaltung (G1, G2) mit den Ausgängen der Flip-Flops (F1, F2), der Steuereinheit und der Leitung für das zu überwachende Binärsignal ($e_n$) so verbunden sind, daß folgende Merkmale zutreffen:

a) wenn ein Steuerimpuls vorliegt, dann nimmt die Ausgangsvariable ($q_n$) der ersten Gatterschaltung (G1) einen ersten vorbestimmten Binärwert an, während die Ausgangsvariable der zweiten Gatterschaltung (G2) durch den im ersten Flip-Flop (F1) vor dem Auftreten des Steuerimpulses gespeicherten Binärwert festgelegt ist

b) wenn kein Steuerimpuls vorliegt, dann nimmt die Ausgangsvariable ($q_n$) der ersten Gatterschaltung (G1) den im ersten Flip-Flop (F1) gespeicherten Binärwert an, falls im zu überwachenden Binärsignal ($e_n$) ein zweiter vorbestimmter Binärwert auftritt, und sie ($q_n$) nimmt den zum ersten vorbestimmten Binärwert inversen Wert an, falls im zu überwachenden Binärsignal ($e_n$) der zum zweiten vorbestimmten Binärwert inverse Wert auftritt, während die Ausgangsvariable ($p_n$) der zweiten Gatterschaltung (G2) den im zweiten Flip-Flop (F2) gespeicherten Binärwert annimmt.

2. Schaltungsanordnung nach Anspruch 1, dadurch gekennzeichnet, daß die Steuereinheit ein zyklisch laufender Zähler ist, der mit demselben Takt (T) wie die Flip-Flops (F1, F2) betrieben wird, und daß es sich bei den Steuerimpulses ($s_n$) um die Carry-Impulse des Zählers handelt.

3. Schaltungsanordnung nach Anspruch 2, dadurch gekennzeichnet, daß die erste und die zweite Gatterschaltung (G1, G2) aus jeweils zwei UND-Gattern bestehen, deren Ausgänge an ein NOR-Gatter geführt sind, daß die Ausgänge der NOR-Gatter an die Dateneingänge von zugehörigen D-Flip-Flops (F1, F2) geführt sind, daß der Q-Ausgang eines jeden D-Flip-Flops an einen Eingang des ersten UND-Gatters der zugehörigen Gatterschaltung (G1, G2) geführt ist, während der zweite Eingang mit dem Carry-Ausgang des Zählers verbunden ist, daß das zweite UND-Gatter der ersten Gatterschaltung (G1) das Carry-Signal des Zählers mit dem zu prüfenden Signal ($e_n$) verknüpft und das zweite UND-Gatter der zweiten Gatterschaltung (G2) das Signal am Q-Ausgang des ersten D-Flip-Flops (F1) mit dem invertierten Carry-Signal ($s_n$) des Zählers verknüpft.